(19) Europäisches Patentamt

European Patent Office

Office européen des brevets

(11) **EP 0 591 202 B1**

(12) **EUROPEAN PATENT SPECIFICATION**

(45) Date of publication and mention
of the grant of the patent:
**19.04.2000  Bulletin 2000/16**

(21) Application number: **91917776.6**

(22) Date of filing: **23.10.1991**

(51) Int. Cl.[7]: **C01B 31/10**

(86) International application number:
**PCT/FI91/00318**

(87) International publication number:
**WO 92/06919 (30.04.1992  Gazette 1992/10)**

(54) **METHOD FOR MANUFACTURING ACTIVATED CARBON FROM CELLULOSIC MATERIAL**

VERFAHREN ZUM HERSTELLEN VON AKTIVKOHLE AUS EINEM ZELLULOSEHALTIGEN MATERIAL

PROCEDE POUR FABRIQUER DU CHARBON ACTIF A PARTIR DE MATIERE CELLULOSIQUE

(84) Designated Contracting States:
**AT BE CH DE DK ES FR GB IT LI NL SE**

(30) Priority:  **23.10.1990 FI 905205**

(43) Date of publication of application:
**13.04.1994  Bulletin 1994/15**

(73) Proprietor:
**KURARAY CHEMICAL CO., LTD.
Osaka 530 (JP)**

(72) Inventors:
• **NOUSIAINEN, Pertti
SF-33720 Tampere (FI)**

• **HEIDARI, Shahram
SF-33100 Tampere (FI)**

(74) Representative:
**Hakola, Unto Tapani et al
Tampereen Patenttitoimisto Oy,
Hermiankatu 6
33720 Tampere (FI)**

(56) References cited:
**GB-A- 1 455 531          GB-A- 2 225 003
SE-B- 437 655**

Printed by Xerox (UK) Business Services
2.16.7 (HRS)/3.6

**Description**

The invention relates to a method for manufacturing activated carbon from cellulosic material which method comprises treatment of the material with a diammonium or triammonium phosphate solution with a pH in the alkaline range, which forms an ester with cellulose, and subsequent pyrolysis and activation in a suitable atmosphere and using a suitable temperature-time program.

It is known to form activated carbon from cellulosic fibrous material by performing pyrolysis and activation of the fibres in a suitable atmosphere by raising the temperature according to a suitable program up to about 500 - 1000 °C. On one hand, a certain weight loss takes place in this heat treatment due to pyrolysis and, at the same time, microporosity typical of activated carbon is generated. Efforts have been made to control these phenomena by performing the fibrous material, which is used as starting material, a pretreatment wherein it is impregnated with a suitable solution. It is known e.g. to treat the starting material with a solution containing Lewis acid like e.g. a solution of aluminum chloride, zinc chloride or calcium chloride or a solution of their mixture. In this way, attempts have been made to reduce weight losses at later stages of the heat treatment in order to improve the strength of the final product.

Furthermore, it is known to use phosphoric compounds in the pretreatment of starting materials containing cellulosic fibres, like in the pretreatment of cloth. This kind of method has been presented in a publication DE-A-2,500,307 (Toyobo Co Ltd) the equivalent of which is the publication GB-A-1,455,531, wherein polynosic viscose fibres are impregnated with a solution containing phosphate like phosphoric acid, diammonium hydrogenphosphate, a solution of polyphosphoric acid, urea phosphate etc. The actual heat treatment is performed in an atmosphere containing primarily nitrogen appr. between 250-300°C for appr. 30 min after which the temperature is quickly raised to 800°C where activation is accomplished by an activation gas containing appr. 30 % water vapor. In the method, the purpose is to use very strong regenerated fibres as the starting material, whereby the phosphoric compound is purposed to help in maintaining the strength during the heat treatment and to contribute to the evaporation of phosphorous during the activation stage for increasing the adsorption efficiency. Furthermore it has been stated that use of phosphoric compounds significantly increases the rate of activation by water vapor thus reducing the processing time.

As to treatment of the fibres in an acid solution before the pyrolysis and activation, reference is made to the publication GB-A-2,225,003.

The object of the invention is to obtain a method by which active carbon can be manufactured, using materials pretreated with a phosphate compound, from cellulosic materials whose initial strength is not of the same order as presented in the above mentioned patent publication but, however, the obtainable active carbon products showing good strength and adsorption properties. To accomplish this the method according to the invention is primarily **characterized** in that the cellulosic material is high tenacity viscose fibre having tensile strength of about 2.9-3.2 cN/dtex and the activation is performed in a carbon dioxide atmosphere containing other activating gases in an amount of less than 10% by volume of the amount of carbon dioxide by means of a carbon dioxide reduction, carbon dioxide gas flowing past the material to be treated.

During the pyrolysis stage, phosphoric compounds catalyse splitting of water molecules from cellulose molecules by chemically bonding the C-6 carbons of the cellulose molecule, which would, if they were free, cause the formation of different kinds of heterocyclic compounds separating from the material i.e. so-called tars. For this reason, yield is improved. Subsequent activation is performed in a carbon dioxide atmosphere where activation process is controlled by the pressure and the flow rate of the carbon dioxide gas where pore structure is generated by reduction of carbon dioxide whereby carbon is released from the material in the form of carbon monoxide. The method has some additional advantageous alternative embodiments concerning applied temperatures and rates at which temperature is raised.

Treatment is performed with a, triammonium phosphate or diammonium hydrogenphosphate. Treatment is then performed by impregnating the material used as the starting material with a solution containing these phosphates, concentration of the solution being 1-10 % by weight.

Use of carbon dioxide as the activation gas enables higher activation temperatures as well as longer treating times whereby a favorable pore structure is generated without loss in strength. Furthermore, it is possible to influence on the generation of pores during activation stage through the law of mass action on basis of the following reaction equation:

$$CO_2 + C \leftrightarrow 2CO$$

By means of pressure and flow velocity in the activation process, generation of pore volume can be further fine adjusted and thus obtain an optimum degree of activation with desired strength and pore volume. Composition of the carbon dioxide atmosphere is such that there are no other activating gases or their concentration is less than 10 % by volume of the amount of carbon dioxide.

Carbon dioxide is preferably used as the atmospheric gas also at the pyrolysis stage whereby pyrolysis and the successive activation can be performed without changing the gas. Also at stages other than activation (at temperatures appr. below 700°C) nitrogen can be used.

The successive stages of pyrolysis and activation are performed by means of a temperature-time program which is characterized by the relatively slow raise of temperature to 340°C, a more gentle raise of temperature between 340°C and 500°C or a constant temperature for a specific period of time, and a relatively slow raise of temperature to the activation stage at over 850°C. Activation stage is continued at over 850°C until yield is below 25% of the original, preferably below 22%. Furthermore, by using nitrogenous phosphoric compounds like ammonium phosphates in the treatment it is possible to obtain P-N-compounds which induce cross linkages in the carbonised material, which fact strengthens the structure of the product.

Influence of the phosphate compound has turned out to be favorable at a surprisingly small concentration of phosphorus. The analyzed phosphoric content of the material treated with diammonium hydrogenphosphate, before the heat treatment, is 0,7% by weight calculated as phosphorus atoms which corresponds to only about 4% of the phosphoric compound chemically bound to cellulose. The analyzed nitrogen content of the material is 0,38% by weight when diammonium hydrogenphosphate is used. Effect of phosphorus at this low concentrations is probably due to the ability of the phosphate group to influence also on other anhydroglucose units of cellulose than the one it is bound to.

It is typical to the product manufactured according to the method that it contains, even after activation, over 1% phosphorus by weight and over 0,4% nitrogen by weight, which in the case of diammonium hydrogenphosphate at a yield of 20-25% corresponds for the part of phosphorus to the residual phosphorus content of up to and over 25% of the original amount and for the part of nitrogen up to and over 20% of the original amount. In the subsequent table 1 there are given phosphorus and nitrogen contents of some samples manufactured by the method according to the invention.

According to the invention, it has been possible to manufacture from high-tenacity viscose fibres with the tensile strength of about 2.9-3.2 cN/dtex active carbon material with a yield of 14-25% and a BET value of 750-1600 $m^2$/g. At yields between 14-22% BET values of 1000-1600 $m^2$ have been reached. At these yields the cloths were also observed to have a sufficient strength for different purposes which are various practical applications dealing with separation of materials from gases and liquids like breathing masks and various filters in particular. Gloss and softness without feeling of stickiness were additionally typical features of the obtained cloths.

Table 1

| Remaining phosphorus and nitrogen contents of samples obtained from runs 6, 9, 11, 16 and 17 after activation. Original contents: phosphorus 0,70% and nitrogen 0,38%. Parameters of the runs described later. | | | | |
|---|---|---|---|---|
| Run no | Yield, % | BET, $m^2$/g | P, % | N, % |
| 6 | 23.1 | 878 | 1.40 | 0.52 |
| 9 | 16.9 | 1460 | 1.78 | 0.73 |
| 11 | 20.4 | 1164 | 2.05 | 0.82 |
| 16 | 21.8 | not meas. | 1.02 | 0.51 |
| 17 | 22.4 | - " - | 1.38 | 0.57 |

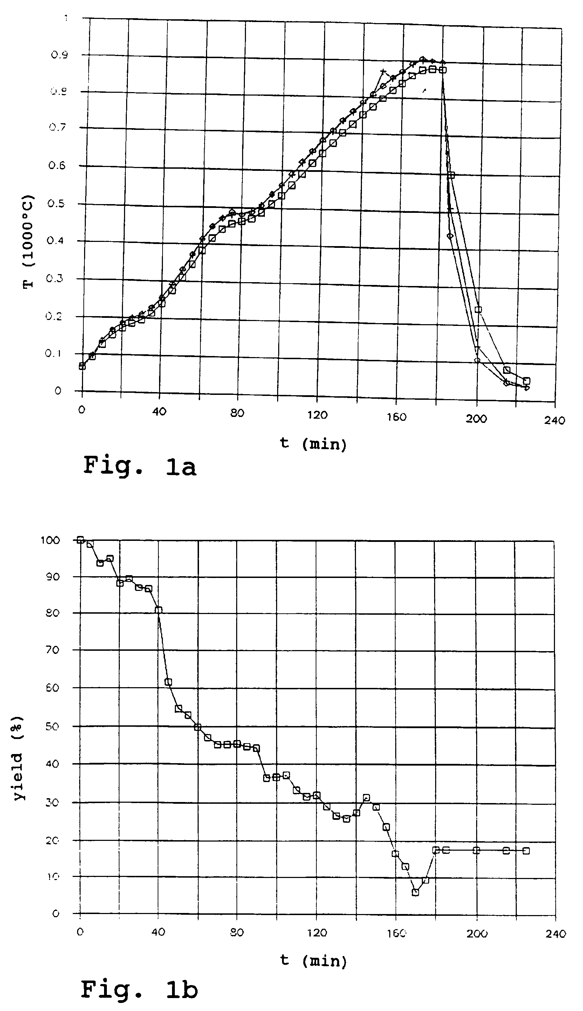

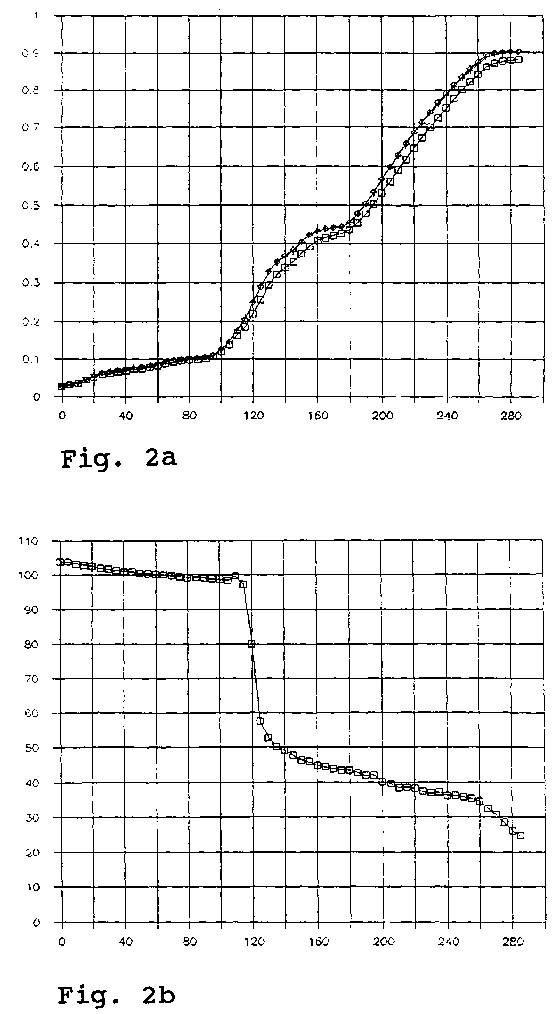

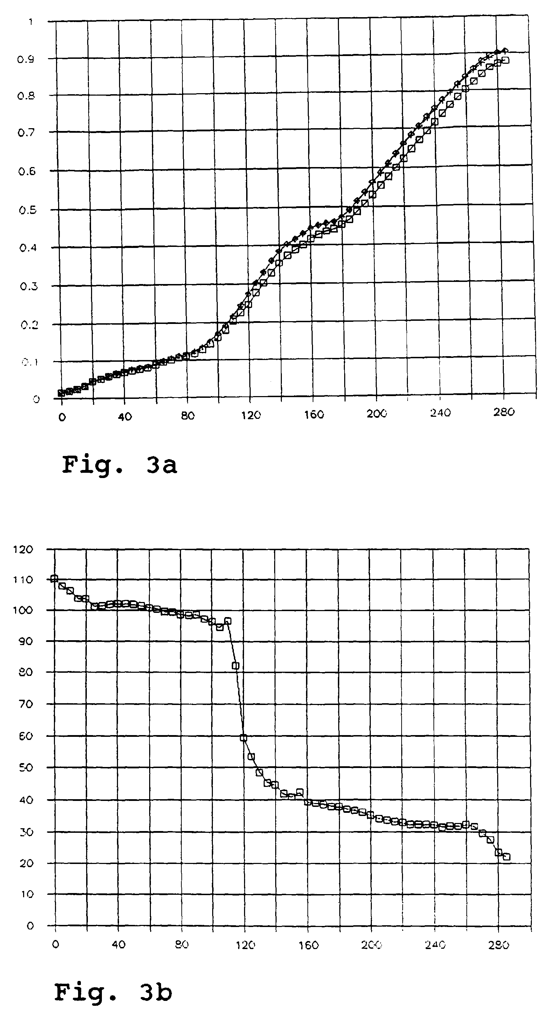

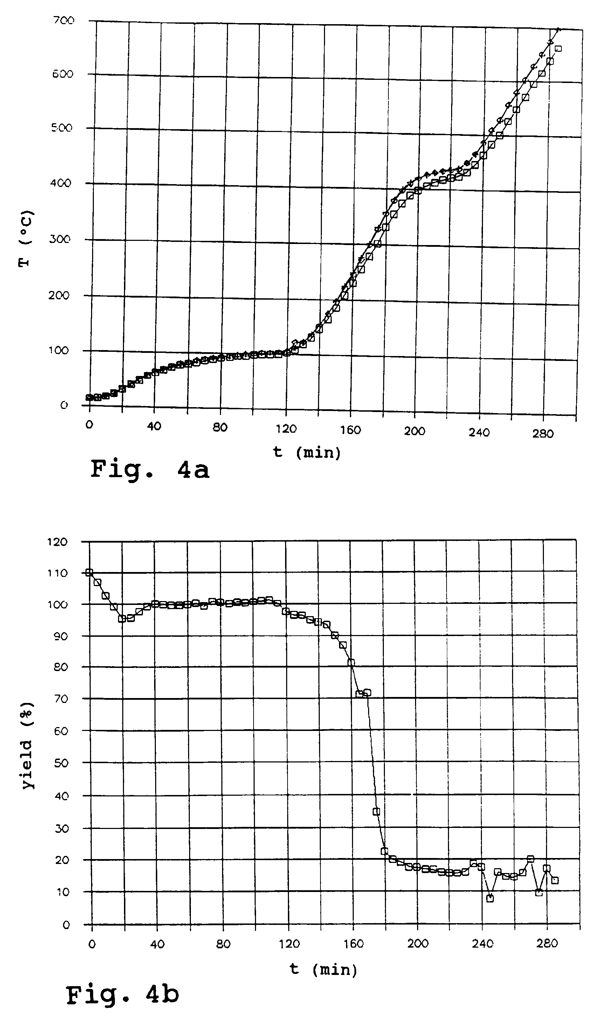

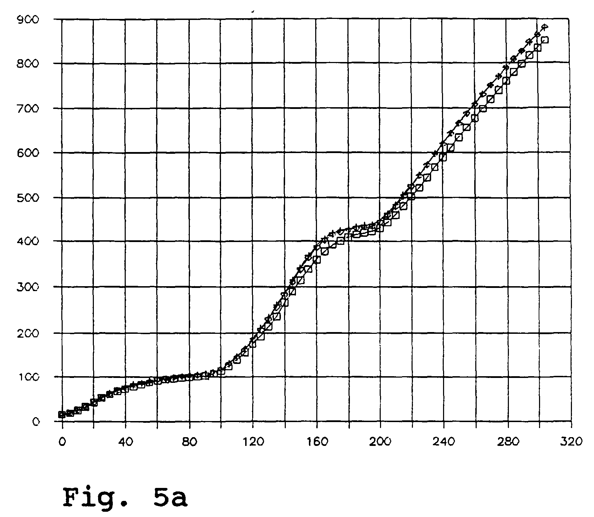

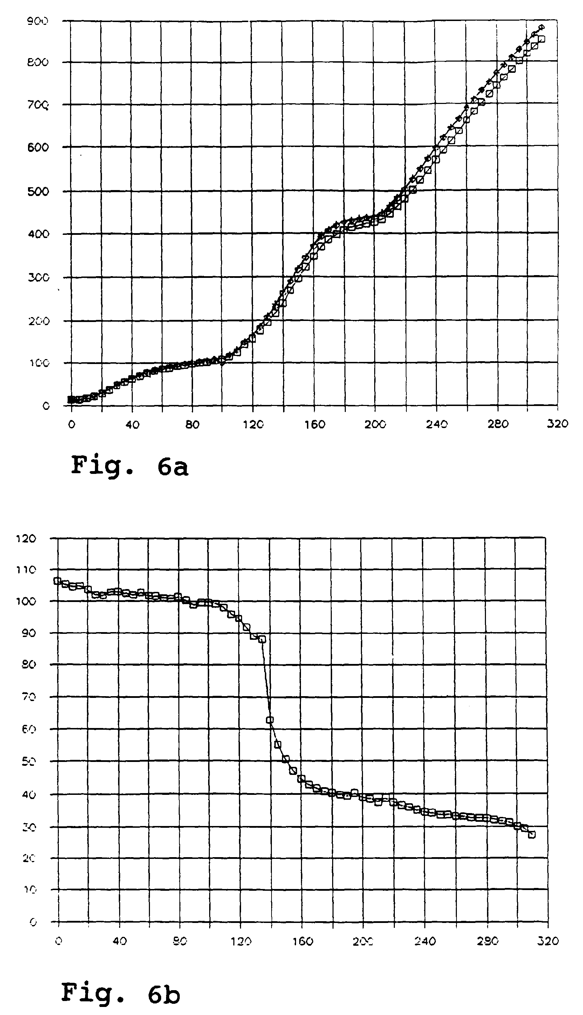

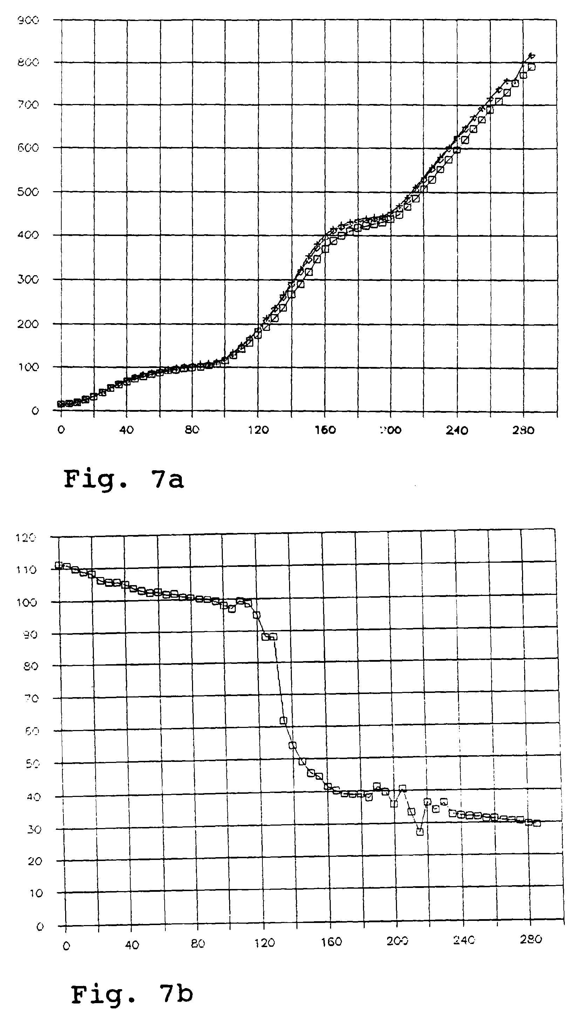

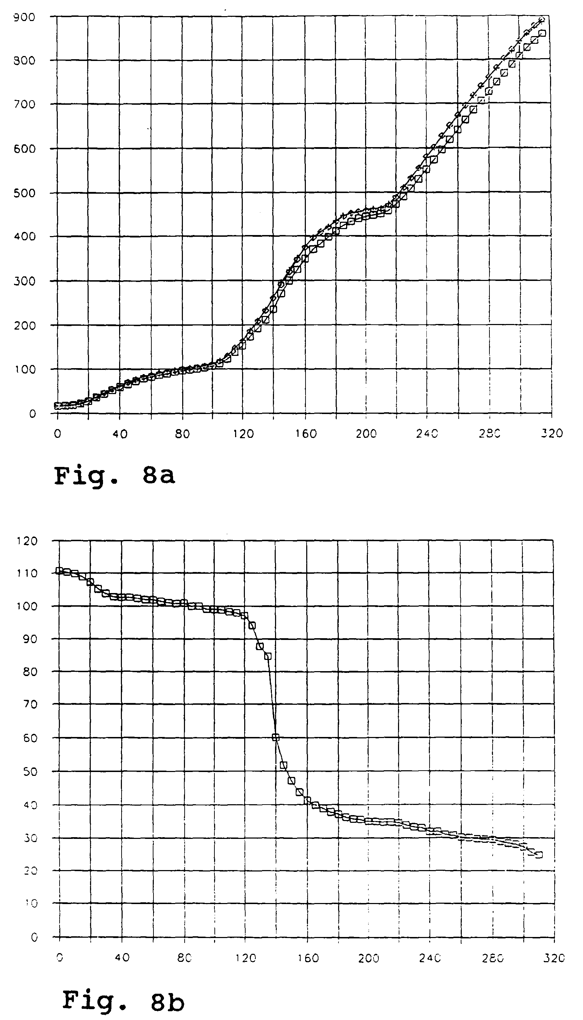

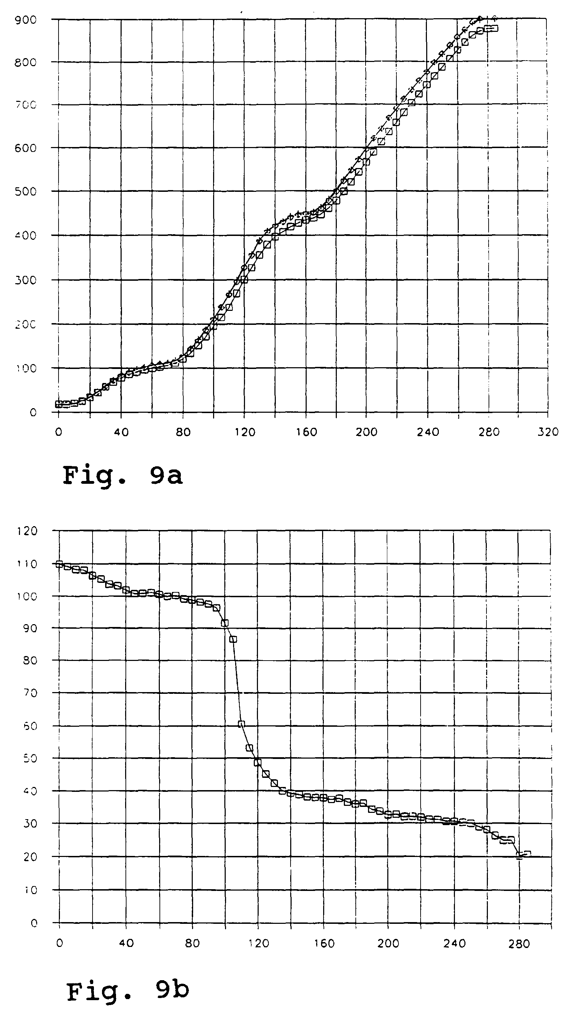

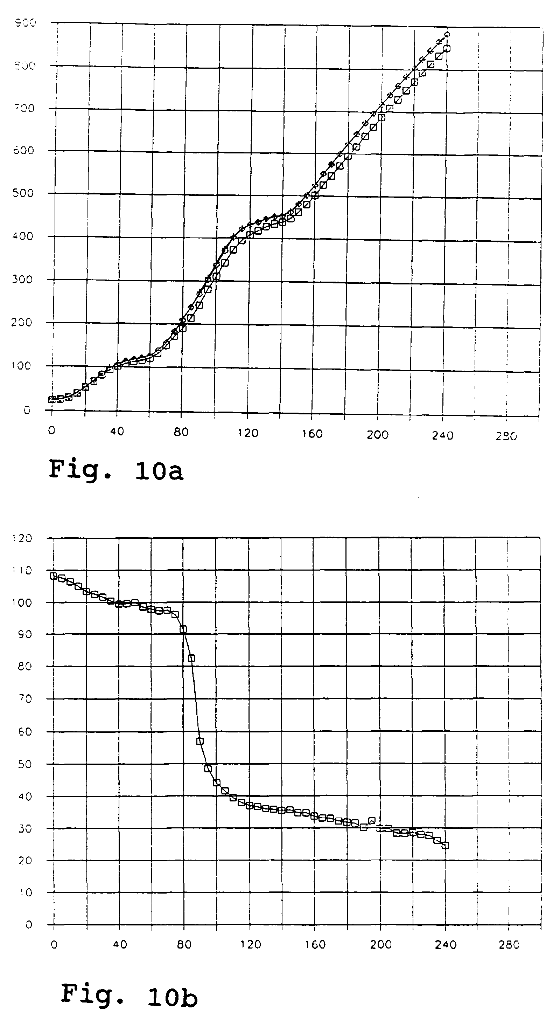

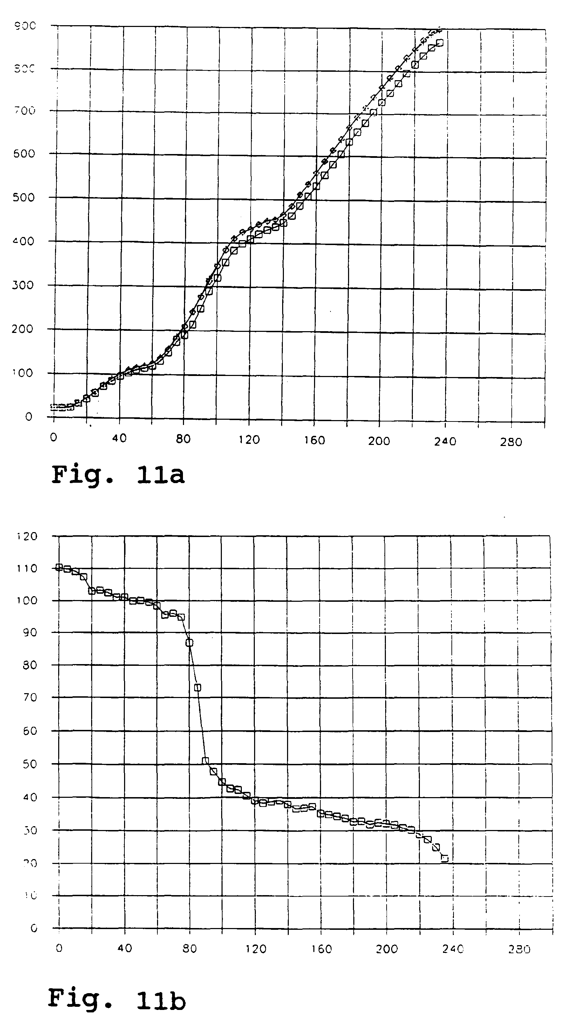

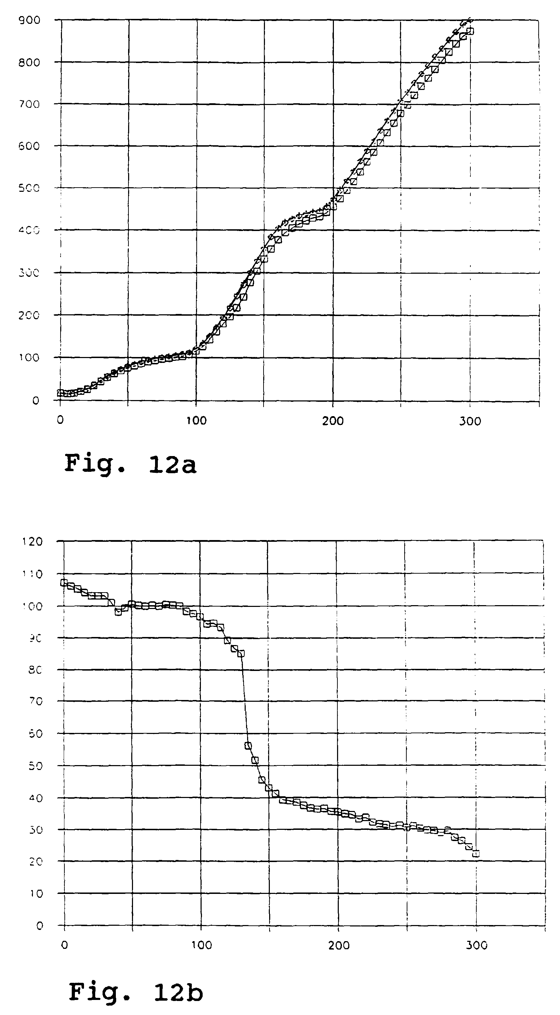

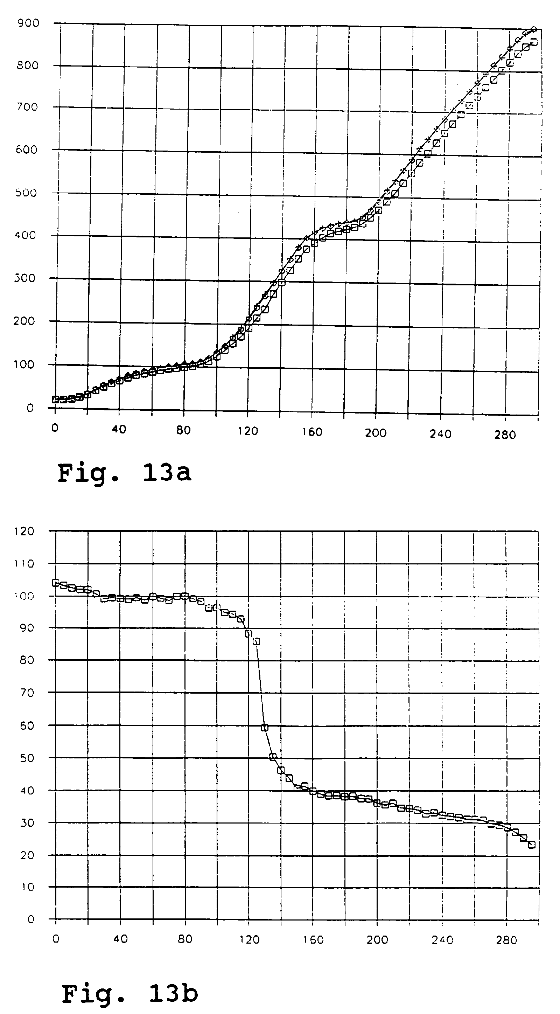

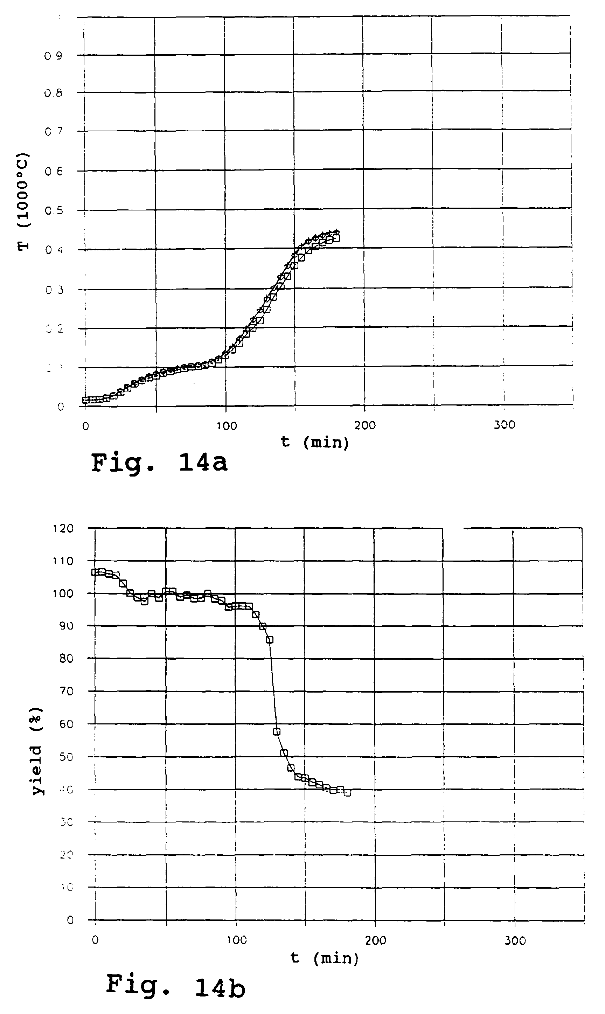

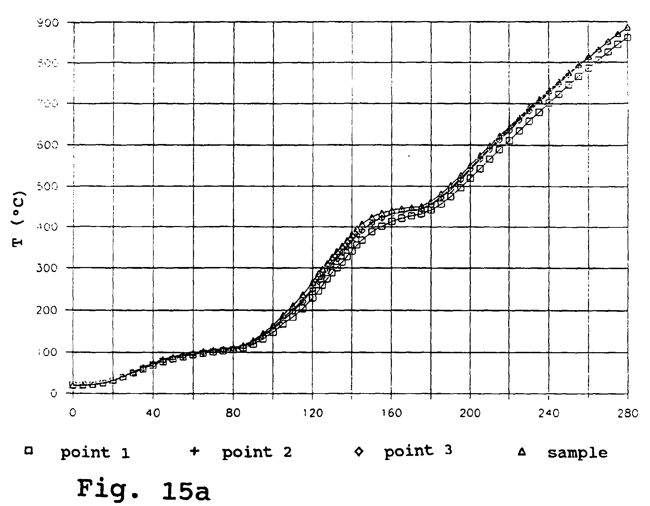

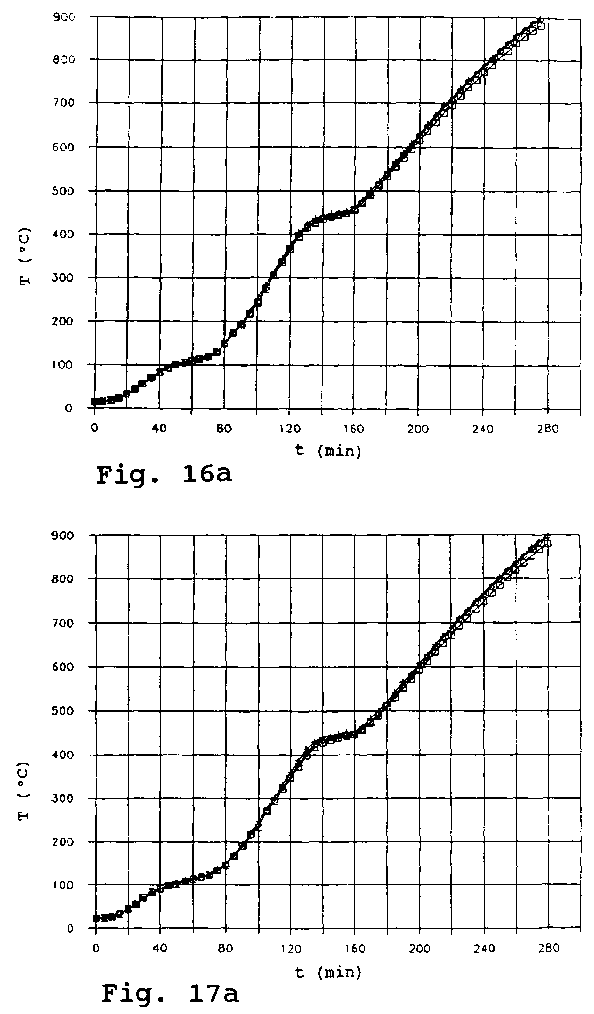

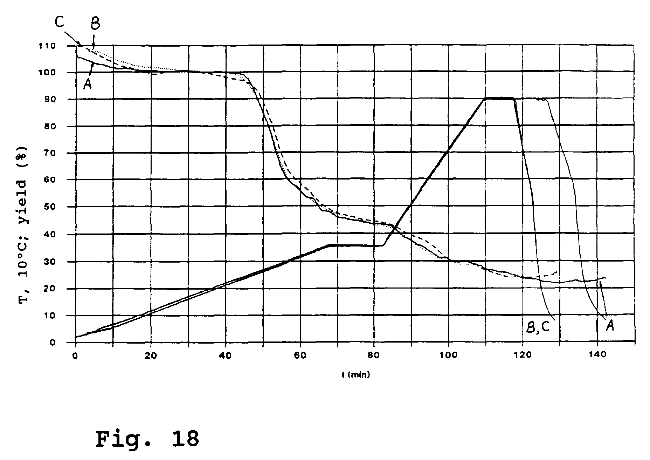

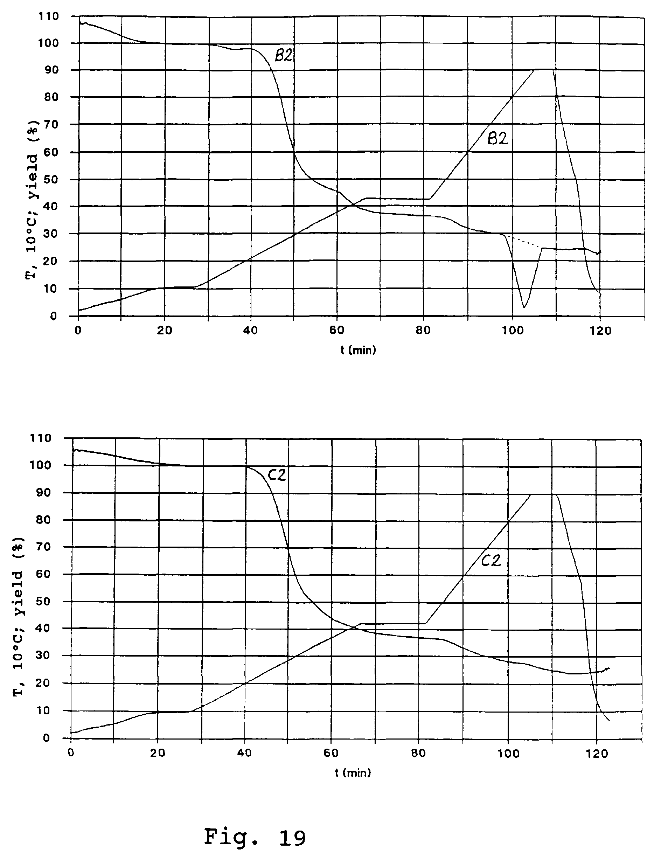

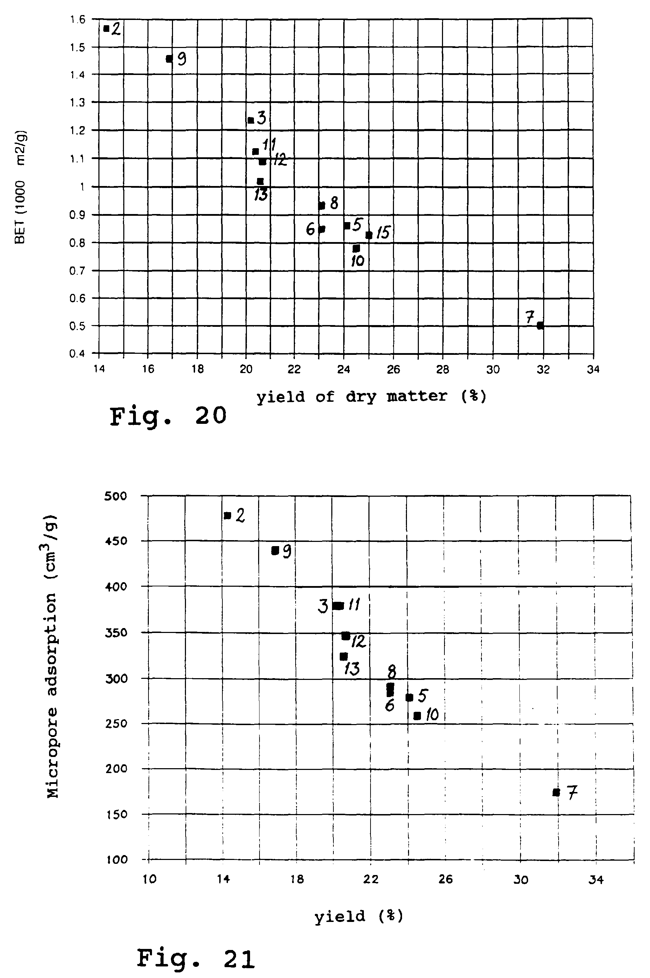

The invention will be described more closely in the following by means of a preliminary test sequence performed according to the method of the invention and an actual test sequence whose individual tests have been illustrated in the following drawings in which numbers of figures 1-17 correspond to the test number of the actual test sequence, the curve marked with 'a' showing the temperature curve of the corresponding test as a function of time and the curve marked with 'b' showing the mass of the treated sample in the corresponding test as a function of time, figures 18 and 19 showing same information of the preliminary tests, figure 20 illustrates the specific surface area of the samples obtained from the actual test sequence as a function of yield, and figure 21 shows the microporosity adsorption of the same samples as a function of yield. Different temperature curves in each figure describe the readings obtained at temperature measuring points in different parts of the furnace. Figure 15 additionally shows the sample temperature measured during the run.

A cellulosic material is used as a starting material in the method and it can be e.g. in the form of cloth. The starting material is viscose fibres with their natural high strength and porosity of a certain degree. A suitable material is the high-tenacity viscose fibre of 1,0 - 1,3 dtex manufactured by the applicant having a tensile strength of about 2,9 - 3,2 cN/dtex. The initial porosity of the fibres is within the range 100 - 500 µl/g measured by a mercury porosimeter.

From the 15 tex viscose yarn (yarn 2804) made of the above mentioned high tenacity viscose fibre, a cloth (MS cloth) was woven whose area weight was 186 $g/m^2$. Pieces of cloth were pretreated according to the invention with different solutions which contained ammonium phosphate and also a reference test was made using a piece of cloth with no pretreatment. The treating solutions were water solutions containing 2-2.5% by weight of triammonium phosphate and diammonium hydrogenphosphate with pH in the alkaline range, over 8,0. In preparing the samples for the tests, the solution was allowed to soak into the cloth altogether for 3 min at room temperature and the excess solution was removed after the treatment first mechanically putting the piece five times in succession through press rolls applying a suitable line pressure, which is most preferably about 180 N/cm, after which the piece of cloth was dried at 110°-120°C for 2 - 5 min. After drying, the piece of cloth was still softened mechanically putting it three times in succession through the press rolls applying the above mentioned line pressure.

The following table 2 shows the measured DP values for cloths pretreated in solutions of different concentrations using different impregnating times and temperatures. It can be seen from the table that treatment does not have any influence on the important properties of the fibres.

Table 2

| DP values for MS cloths treated with different solutions and for different times. t= time (min), T= temperature (°C), $DP_w$= average degree of polymerization by mass, $DP_n$= degree of polymerization by number, PD= $DP_w/DP_n$= polydispersity | | | | | |
|---|---|---|---|---|---|
| Treating solution | t | T | $DP_w$ | $DP_n$ | PD |
| Batch I | | | | | |
| no treatment | - | - | 2321 | 929 | 2,50 |
| 2% $(NH_4)_3PO_4$ | 3 | 22 | 2414 | 1102 | 2,19 |
| 2% $(NH_4)_2HPO_4$ | 3 | 22 | 2288 | 1008 | 2,27 |
| Batch II | | | | | |
| no treatment | - | - | 2196 | 853 | 2,57 |
| 10% $(NH_4)_3PO_4$ | 10 | 22 | 2277 | 889 | 2,56 |
| 10% $(NH_4)_3PO_4$ | 10 | 80 | 2196 | 879 | 2,50 |
| 2% $(NH_4)_3PO_4$ | 10 | 22 | 2384 | 899 | 2,65 |
| 2% $(NH_4)_3PO_4$ | 10 | 80 | 2212 | 917 | 2,41 |

The tests performed according to the method of the invention will be described more closely in the following.

The preliminary test sequence

The MS-cloth was pretreated with $(NH_4)_3PO_4$ (2,5%). The impregnating times of the samples at room temperature (22-25°C) were 15 min (runs A and B) and 13 min (run C).

Fibre samples were performed carbonisation/activation tests using pure $CO_2$ as the gas in a thermobalance. The $CO_2$ gas flowed past the sample in excess relative to the corresponding stoichiometric proportion. These tests were purposed to determine the effect of impregnating time and the temperature-time program on the obtained final product. Figure 18 shows the weight loss and temperature curves (weight loss curves are calculated relative to the dry weight). Yields and specific surface areas, obtained from the nitrogen adsorption isotherms using several points of the isotherms (BET values), of the corresponding runs are presented in table 3. In runs A, B and C, a temperature profile was generally used wherein temperature was raised from 100°C to 360°C at a rate of 5°C/min where it was kept for 15 min after which temperature was raised at a rate of 20°C/min to 900°C whereat the sample was kept for about 7 min (runs B and C) or about 16 min (run A) after which the desired degree of activation was reached. Cooling to below 100°C was subsequently performed in about 10-15 min.

Table 3

| Results of the preliminary thermobalance tests. | | |
|---|---|---|
| Run | Yield (% of the original dry mass) | BET surface area ($m^2$/g) |
| A | about 23,5 | 1020 |
| B | about 23 | 700-800 |
| C | about 25 | 700-810 |

On basis of the first experiments it seemed that impregnating time (3 or 15 min) had no significant effect on the final result. The same cloth samples were then performed runs B2 and C2, where the letters indicate the same samples as before, using a new temperature profile. In these runs, the rate at which temperature was raised from 100°C to the stage of pyrolysis was increased a little, to about 8 min, and the temperature at which the sample was kept for a longer period of time during the pyrolysis stage was raised from 360°C to 425°C because the earlier experiments indicated that pyrolysis continues in a significant degree at temperatures over 360°C. Other rates and values were kept the same. Temperature profiles and weight loss curves are presented in figure 19 and the results are presented in table 4.

Table 4

| Results of the preliminary thermobalance tests. | | |
|---|---|---|
| Run | Yield (% of the original dry mass) | BET surface area ($m^2$/g) |
| B2 | about 25 | 620-670 |
| C2 | about 25,5 | 760-820 |

On basis of the performed experiments it was not possible to prove that an impregnation of 15 minutes gives a better product than an impregnation of 3 minutes.

Actual test sequence

For carbonisation/activation tests a steel reactor was trimmed where it was possible to treat samples, which were larger than the samples made for the thermobalance, having the original size of 20x50 $cm^2$. The sample was suspended from a sample holder specifically designed for this purpose so that the best possible material transfer between the activation gas ($CO_2$) and the sample could be obtained. In runs 1-15, carbon dioxide was fed into the reactor 2 l/min (NTP). This corresponds to about 3,0 kg $CO_2$ per $m^2$ of the final product if only that part of the gas is taken into account which was fed at a temperature over 700 °C. In practice, the amount of $CO_2$ is of (chemical) significance only at temperatures over 700°C where $CO_2$ can react with carbon. The gas flow used was about 25-fold compared to the stoichiometric ratio.

In runs 16 and 17, the flow rate of $CO_2$ was 0,8 l/min (NTP) which corresponds to about 1,2 kg $CO_2$ per $m^2$ of the final product at over 700°C. In this case, the gas flow used was about 10-fold compared to the stoichiometric ratio. Run 16 had also a special feature in that a sample was used that had not been mechanically softened after impregnation and drying. Run 17 in turn had a special feature in that, during the pyrolysis stage up to about 600°C and during cooling stage after the activation stage, nitrogen was used instead of carbon dioxide at the same flow rate as the flow rate of carbon dioxide in run 16.

The sample suspender was connected to an electronic balance so that sample mass and, therefore, also the proceeding of carbonisation/activation could be followed during the test. Carbonisation/activation tests were terminated on basis of the balance reading.

The test was terminated by lifting the whole steel reactor out of the furnace and cooling the outside of the reactor with pressurized air. During the whole cooling period, excluding the above mentioned run 17, a $CO_2$ flow was led into the reactor. The reactor was not opened until temperature was below 100°C. When the reactor was lifted out of the furnace and cooled by pressurized air its temperature decreased from about 900°C to the temperature of 500°C in 3-5 minutes. Temperature reached 100°C in 15-20 minutes.

After each test, a sample was taken from the fibrous active coal (at first from the upper side but from the run 3 onwards a cross-section in the middle) for the determination of nitrogen adsorption isotherm. Specific surface area was determined from the $N_2$ adsorption isotherm using a so-called many-point method according to the BET equation. $N_2$ adsorption in the so-called micropore range (at very low values of relative partial pressures of nitrogen) were also determined from these adsorption isotherms. These values are presented graphically in figures 20 and 21 in which the run numbers corresponding the points have been marked. From figure 20 one obtains such a correlation that while yield is about 14-22% the BET value lies in the range 1000-1600 $m^2$/g.

Viscous fibre contracted strongly during carbonisation and activation. To determine the extent of contraction sample dimensions were measured before and after the run in each test. On the average, area of the sample contracted 52-60% when the yield percentage of the mass was 20-25% i.e. area of the product was 40-48% of the original area of the sample. In run 14 contraction during carbonisation was separately investigated by terminating the test after the carbonisation stage. Area contraction was about 40% during the carbonisation stage i.e. about 60% of the original area remained.

In practice it can be assumed that as the mass yield percentage is about 22%, the obtained yield from the original cloth area is 40-45%.

After carbonisation and activation sample dimensions were about 14x30 $cm^2$. Cross-sectional samples were taken for surface area determinations from the middle of the sample so that specific surface area was determined from pieces having a width of about 3 cm.

In run 4 a sample was used with no phosphate pre-treatment. The sample was reactive and yield dropped already early at the pyrolysis stage below 20%.

The sample obtained from run 16, which had not been mechanically softened before run, showed the same externally observable properties (strength, feeling, flexibility) as samples obtained from other runs with the above mentioned pre-treatment.

Runs 16 and 17, which had different test conditions compared to the other runs 1-15, showed quite similar results as said runs giving yield values of 21,8% and 22,4%. In a repetition test which corresponded, as to the flow rate of carbon dioxide and the temperature profile, to run 16 a surface area of about 1100 $m^2$/g was obtained when the yield was 19,9%. Based on the data of this and the foregoing runs 1-15 (figure 20) the BET values of runs 16 and 17 can be estimated at about 1000-1200 $m^2$/g.

Yields, specific surface areas and micropore adsorption values obtained for samples in different runs are presented in the following table 5.

Table 5

| Results of the actual test sequence, BET= specific surface area, MH= micropore adsorption. | | | | |
|---|---|---|---|---|
| Run | Impregnating solution | Yield (dry subst. weight-%) | BET ($m^2$/g) | MH ($cm^3$/g) |
| 1 | N3 | 24.2 | 669.5 | - |
| 2 | N3 | 14.3 | 1566 | 480 |
| 3 | N3 | 20.2 | 1235.5 | 380 |
| 4 | 0 | 14.7 | - | - |
| 5 | N3 | 24.1 | 862 | 280 |
| 6 | N2 | 23.1 | 848 | 280 |
| 7 | N3 | 31.9 | 502.5 | 170 |
| 8 | N3 | 23.1 | 934 | 290 |
| 9 | N2 | 16.9 | 1459.5 | 440 |
| 10 | N2 | 24.5 | 781 | 260 |
| 11 | N2 | 20.4 | 1125 | 380 |
| 12 | N2 | 20.7 | 1092 | 350 |
| 13 | N2 | 20.6 | 1019 | 320 |
| 14 | N2 | 37.7 | - | - |
| 15 | N2 | 25.0 | 828 | - |

EP 0 591 202 B1

Table 5 (continued)

| Results of the actual test sequence, BET= specific surface area, MH= micropore adsorption. | | | | |
|---|---|---|---|---|
| Run | Impregnating solution | Yield (dry subst. weight-%) | BET ($m^2$/g) | MH ($cm^3$/g) |
| 16 | N2 | 21.8 | - | - |
| 17 | N2 | 22.4 | - | - |
| 0 = no treatment<br>N2 = impregnation solution $(NH_4)_2HPO_4$ (2%)<br>N3 = impregnation solution $(NH_4)_3PO_4$ (2%) | | | | |

A test for toluene adsorption was performed to samples from runs 6, 9, and 11 by placing 9 sample pieces having a diameter of 20 mm (area weight 100-106 g/$m^2$) in a flow tube on top of each other. Air with a toluene content of 0,96 g/$m^3$ and relative humidity of 80% were let to flow through the stack of samples at room temperature at a velocity of 13,3 m/s which corresponds to about 2,5 l/min. The elapsed time before toluene could be observed by a gas analyzer on the other side of the sample stack was measured. Results compared to the same amount of active carbon cloth (cc) available in the market and used in NBC protective clothing are presented in the following table 6.

Table 6

| Toluene adsorption of different samples, *) = a piece split from the sample during the test. | | |
|---|---|---|
| Sample | Time (min) | Weight change (g) |
| 6 | 22 | -0,003* |
| 9 | 18 | +0,117 |
| 11 | 21 | +0,072 |
| cc | 4 | +0,022 |

The change in sample weight is greater than that of toluene adsorption calculated on basis of time. This is due to the high relative humidity of air whereby humidity was also adsorbed on the cloth.

Samples from runs 16 and 17 were also tested for strength and the results are shown in the following table 7.

Table 7

| Strength tests of the active carbon cloths. Width and length of the sample pieces 5 cm. Tensile strengths given in units N/(g/cm) based on area weight. The first figure is the value in longitudinal direction and the second in a transverse direction. | | | |
|---|---|---|---|
| Sample | Area weight (g/$m^2$) | Tensile strength | Elongation at break (%) |
| 16 | 99.1 | 186 - 214 | 50 - 107 |
| 17 | 104.1 | 188 - 154 | 45 - 93 |

**Claims**

1.  Method for manufacturing activated carbon from cellulosic material which method comprises treatment of the material with a diammonium or triammonium phosphate solution with a pH in the alkaline range, which forms an ester with cellulose, and subsequent pyrolysis and activation in a suitable atmosphere and using a suitable temperature/time program, wherein the cellulosic material is high tenacity viscose fibre having tensile strength of about 2.9-3.2 cN/dtex and the activation is performed in a carbon dioxide atmosphere containing other activating gases in an amount of less than 10% by volume of the amount of carbon dioxide, by means of a carbon dioxide reduction, carbon dioxide gas flowing past the material to be treated.

2.  Method according to claim 1, **characterized** in that also pyrolysis is performed in a carbon dioxide atmosphere as

7

the carbon dioxide gas flows past the material under treatment for splitting water from the material.

3. Method according to claim 1 or 2, **characterized** in that the temperature of the material is raised at the pyrolysis stage from 120°C to 500°C for 60 to 150 min.

4. Method according to any of the claims 1 to 3 above, **characterized** in that at the pyrolysis stage, the temperature/time diagram comprises a section between temperatures 340°C and 500°C where the average rate of temperature raise is below 1.5°C for at least 5 min, preferably for at least 20 min.

5. Method according to claim 4, **characterized** in that said section is between temperatures 400°C and 500°C.

6. Method according to any of the claims 3-5 above, **characterized** in that at the activation stage, the temperature is raised from 500°C to 850°C for 15 to 100 min.

7. Method according to claim 6, **characterized** in that the temperature is raised from 500°C to 850°C for 50 to 100 min.

8. Method according to any of the claims 3-7 above, **characterized** in that the activation stage is continued at over 850°C until the mass of the material is below 25% (yield) of the original dry substance, preferably below 22%, after which the material is cooled.

9. Method according to claim 8, **characterized** in that the activation stage is continued at over 850°C until the yield remains in the range 14-25%, preferably in the range 14-22%.

10. Method according to any of the claims above, **characterized** in that the material is in the form of cloth.

11. Method according to claim 10, **characterized** in that during the treatment the cloth is allowed to change its form freely.

**Patentansprüche**

1. Verfahren zur Herstellung von Aktivkohle aus zellulosehaltigem Material, weiches Verfahren die Behandlung des Materials mit einer einen Ester mit der Zellulose bildenden Diammoniumphosphat- oder Triammoniumphosphatlösung mit pH im alkalischen Bereich und die anschließende Pyrolyse und Aktivierung in einer geeigneten Atmosphäre und unter Verwendung eines geeigneten Temperatur-Zeit-Programms umfaßt, wobei das Zellulosematerial eine hochfeste Viskosefaser mit einer Zugfestigkeit von etwa 2,9—3,2 cN/dtex ist und die Aktivierung in einer Kohlendioxidatmosphäre, die andere aktivierende Gase weniger als 10 Vol.-% bezogen auf die Kohlendioxidmenge enthält, durch Reduzieren des Kohlendioxids erfolgt, wobei das Kohlendioxidgas an dem zu behandelnden Material vorbeiströmt.

2. Verfahren nach Anspruch 1, dadurch **gekennzeichnet,** daß auch die Pyrolyse zur Abtrennung von Wasser aus dem Material in der Kohlendioxidatmosphäre durchgeführt wird, während das Kohlendioxidgas an dem zu behandelnden Material vorbeiströmt.

3. Verfahren nach Anspruch 1 oder 2, dadurch **gekennzeichnet,** daß die Temperatur des Materials in der Pyrolysestufe von 120°C auf 500°C während 60 bis 150 Minuten erhöht wird.

4. Verfahren nach einem der vorhergehenden Ansprüche 1 bis 3, dadurch **gekennzeichnet,** daß in der Pyrolysestufe das Temperatur/ Zeit-Diagramm eine Partie zwischen den Temperaturen 340°C und 500°C umfaßt, wo die mittlere Anstiegsgeschwindigkeit der Temperatur unter 1,5°C während mindestens 5 Minuten, vorzugsweise während mindestens 20 Minuten liegt.

5. Verfahren nach Anspruch 4, dadurch **gekennzeichnet,** daß die genannte Partie zwischen den Temperaturen 400°C und 500°C liegt.

6. Verfahren nach einem der vorhergehenden Ansprüchen 3 bis 5, dadur**ch gekennzeichnet,** daß in der Aktivierungsstufe die Temperatur von 500°C auf 850°C während 15 bis 100 Minuten erhöht wird.

**7.** Verfahren nach Anspruch 6, dadurch **gekennzeichnet,** daß die Temperatur von 500°C auf 850°C während 50 bis 100 Minuten erhöht wird.

**8.** Verfahren nach einem der vorhergehenden Ansprüchen 3 bis 7, dadurch **gekennzeichnet,** daß die Aktivierungsstufe bei über 850°C fortgesetzt wird, bis die Masse des Materials unter 25 % (Ausbeute), vorzugsweise unter 22 % von der ursprünglichen Trockensubstanz liegt, wonach das Material gekühlt wird.

**9.** Verfahren nach Anspruch 8, dadurch **gekennzeichnet,** daß die Aktivierungsstufe bei über 850°C fortgesetzt wird, bis die Ausbeute im Bereich von 14—25 %, vorzugsweise 14—22 % liegt.

**10.** Verfahren nach einem der vorhergehenden Ansprüchen, dadurch **gekennzeichnet,** daß das Material die Form eines Gewebes aufweist.

**11.** Verfahren nach Anspruch 10, dadurch **gekennzeichnet,** daß während der Behandlung das Gewebe ungehindert seine Form ändern kann.

## Revendications

**1.** Procédé pour fabriquer du charbon actif à partir de matière cellulosique, le procédé comportant le traitement de la matière par une solution de phosphate diammonique ou triammonique ayant un pH alcalin et formant un ester avec la cellulose, suivi d'une pyrolyse et d'une activation dans une atmosphère convenable, en employant un programme de temps / température adéquat, la matière cellulosique étant la fibre de viscose à haute ténacité présentant une résistance à la traction d'environ 2,9 à 3,2 cN/dtex et l'activation étant réalisée dans une atmosphère de dioxyde de carbon qui contient d'autres gaz activants en une quantité inférieure à 10 % en volume par rapport à la quantité du dioxyde de carbon, au moyen de réduction du dioxyde de carbon dans un courant de dioxyde de carbon passant la matière à traiter.

**2.** Procédé selon la revendication 1**, caractérisé** en ce que la pyrolyse est aussi réalisée dans une atmosphère de dioxyde de carbon dans le courant du gaz de dioxyde de carbon passant la matière à traiter pour détacher de l'eau de la matière.

**3.** Procédé selon la revendication 1 ou 2, **caractérisé** en ce que la température de la matière est élevée de 120°C à 500°C en 60 à 150 minutes dans l'étape de pyrolyse.

**4.** Procédé selon l'une quelconque des revendications 1 à 3 ci-dessus, **caractérisé** en ce que dans l'étape de pyrolyse le diagramme température / temps comprend une partie entre les températures de 340°C et 500°C dans laquelle la vitesse moyenne de l'élévation de température est inférieure à 1,5°C pendant au moins 5 minutes, de préférence pendant au moins 20 minutes.

**5.** Procédé selon la revendication 4, **caractérisé** en ce que ladite partie se trouve entre les températures de 400°C et 500°C.

**6.** Procédé selon l'une quelconque des revendications 3 à 5 ci-dessus, **caractérisé** en ce que dans l'étape d'activation la température est élevée de 500°C à 850°C en 15 à 100 minutes.

**7.** Procédé selon la revendication 6, **caractérisé** en ce que la température est élevée de 500°C à 850°C en 50 à 100 minutes.

**8.** Procédé selon l'une quelconque des revendications 3 à 7 ci-dessus, **caractérisé** en ce que l'étape d'activation est poursuivie à une température supérieure à 850°C jusqu'à ce que la masse de la matière soit inférieure à 25 % (rendement) de la matière sèche initiale, après quoi la matière est refroidie.

**9.** Procédé selon la revendication 8, **caractérisé** en ce que l'étape d'activation est poursuivie à une température supérieure à 850°C jusqu'à ce que le rendement reste dans l'intervalle de 14 à 25 %, de préférence dans l'intervalle de 14 à 22 %.

**10.** Procédé selon l'une quelconque des revendications ci-dessus, **caractérisé** en ce que la matière est sous forme de tissu.

**11.** Procédé selon la revendication 10, **caractérisé** en ce que le tissu peut changer sa forme librement pendant le traitement.

Fig. 1a

Fig. 1b

## Fig. 2a

## Fig. 2b

Fig. 3a

Fig. 3b

Fig. 4a

Fig. 4b

Fig. 5a

Fig. 6a

Fig. 6b

Fig. 7a

Fig. 7b

Fig. 8a

Fig. 8b

Fig. 9a

Fig. 9b

Fig. 10a

Fig. 10b

Fig. 11a

Fig. 11b

Fig. 12a

Fig. 12b

Fig. 13a

Fig. 13b

Fig. 14a

Fig. 14b

Fig. 16a

Fig. 17a

Fig. 18

Fig. 19

Fig. 20

Fig. 21